# FASCICULE DE BREVET EUROPEEN

(11) **EP 4 452 882 B1**
(45) Date de publication et mention de la délivrance du brevet: **10.09.2025**
(21) Numéro de dépôt: 22839695.8
(22) Date de dépôt: 16.12.2022
(51) Int. Cl.: C03C 17/36

(54) **SUBSTRAT TRANSPARENT MUNI D'UN EMPILEMENT FONCTIONNEL DE COUCHES MINCES**
TRANSPARENTES SUBSTRAT MIT EINEM FUNKTIONELLEN STAPEL AUS DÜNNEN SCHICHTEN
TRANSPARENT SUBSTRATE PROVIDED WITH A FUNCTIONAL STACK OF THIN LAYERS

(30) Priorité: 22.12.2021 FR 2114274
(43) Date de publication de la demande: 30.10.2024
(73) Titulaire: Saint-Gobain Glass France, 92400 Courbevoie (FR)
(72) Inventeur: GUIMARD, Denis, 93300 AUBERVILLIERS (FR); DELBECQ, Cécile, 93300 AUBERVILLIERS (FR); LELARGE, Anne, 93300 AUBERVILLIERS (FR); HIVET, Romain, 93300 AUBERVILLIERS (FR)
(74) Mandataire: Saint-Gobain Recherche
(86) Numéro de dépôt international: PCT/EP2022/086262
(87) Numéro de publication internationale: WO 2023/117725

(56) Documents cités:
- JP-A- 2010 180 449
- US-A- 6 040 939

## Description

### Domaine technique

L'invention concerne un substrat transparent muni d'un empilement fonctionnel de couches minces.

### Arrière-plan technique

Des empilements fonctionnels de couches minces sont couramment utilisés pour procurer des fonctions d'isolation thermique et/ou de protection solaire aux vitrages. Ces vitrages peuvent équiper des bâtiments ou des véhicules. Leur intérêt premier est qu'ils permettent de réduire l'effort de climatisation en évitant une surchauffe excessive (vitrages dits « de contrôle solaire ») et/ou en diminuant la quantité d'énergie dissipée vers l'extérieur (vitrages dits « bas émissifs »).

Un type d'empilement fonctionnel de couches minces particulièrement utilisé comprend une couche fonctionnelle métallique, notamment à base d'argent, permettant la réflexion d'une partie du rayonnement électromagnétique, notamment le rayonnement infrarouge.

La couche fonctionnelle métallique est généralement disposée entre deux ensembles diélectriques, aussi appelés modules diélectriques, afin de neutraliser les effets optiques de réflexion et de réfraction dans le domaine visible. Ces modules diélectriques peuvent comprendre une ou plusieurs couches minces diélectriques du type nitrure, par exemple nitrure de silicium ou d'aluminium, et/ou du type oxyde, par exemple oxyde de silicium, de zinc, d'étain.

Des fonctions de contrôle solaire sont recherchées pour les vitrages susceptibles d'être exposés à de forts taux d'ensoleillement. La capacité d'un vitrage à limiter la quantité d'énergie lumineuse transmise est définie par le facteur solaire, g, qui est le rapport de l'énergie totale transmise au travers de la surface vitrée ou du vitrage vers l'intérieur sur l'énergie solaire incidente. Plus la valeur du facteur solaire, g, est faible, meilleure est la protection contre le rayonnement solaire.

JP H0812378 A [NISSAN MOTOR] 16.01.1996 décrit un empilement fonctionnel « contrôle solaire » comprenant une couche d'oxyde de tungstène disposé entre deux couches diélectriques. L'empilement permet de réduire la résistance électrique de surface et d'augmenter la transparence aux ondes radio par rapport aux empilements comprenant une couche fonctionnelle métallique, en particulier à base d'argent.

JP 2010180449 A [SUMITOMO METAL MINING CO [JP]] 19.08.2010 décrit une couche à base d'oxyde de tungstène déposée par pulvérisation cathodique à l'aide d'une cible d'oxyde de tungstène comprenant des éléments chimiques choisis parmi l'hydrogène, les alcalins, les alcalino-terreux et les terres rares. La couche présente une fonction de « contrôle solaire » grâce à sa forte absorption du rayonnement proche infrarouge.

EP 3686312 A1 [SUMITOMO METAL MINING CO [JP]] 29.07.2020 décrit une couche à base d'oxyde de tungstène dopé au césium, et une méthode de dépôt d'une telle couche par pulvérisation cathodique. La couche présente une transparence aux ondes radio et une fonction de « contrôle solaire » grâce, notamment à sa forte absorption du rayonnement infrarouge.

US 6 040 939 A décrit un substrat en verre muni d'un empilement de contrôle solaire et bas émissif comprenant une couche fonctionnelle à base d'argent et des couches diélectriques à base d'oxyde de tungstène.

### Résumé de l'invention

### Problème technique

Pour certaines applications, par exemple sur les marchés du bâtiment et de la construction, il est souhaitable que l'empilement fonctionnel présente une transmission lumineuse, TL, élevée dans le visible, notamment supérieure 67% voire 77%, afin d'assurer une illumination naturelle suffisante et confortable des intérieurs et de diminuer le recours à l'éclairage artificielle domestique.

Un empilement fonctionnel est qualifié d'empilement fonctionnel convenable pour de telles applications lorsqu'il satisfait une triple exigence : une transmission lumineuse élevée, une valeur faible de facteur solaire et une faible valeur d'émissivité. Un empilement fonctionnel est donc convenable lorsqu'il présente une valeur de sélectivité, s, définie comme le rapport de la transmission lumineuse sur le facteur solaire, élevée et une faible émissivité.

Les solutions de l'état de la technique consistant à utiliser uniquement, dans l'empilement fonctionnel, des couches absorbantes du rayonnement infrarouge comme couches fonctionnelles ne sont pas adaptées car elles présentent une émissivité plus élevée, incompatible par exemple avec les applications sur le marché résidentiel.

Il demeure donc un besoin d'un empilement fonctionnel convenable pour des applications « contrôle solaire » sur un marché résidentiel, c'est-à-dire présentant une sélectivité élevée et des performances énergétiques globales adaptées, notamment concernant l'émissivité.

### Solution au problème technique

Selon un premier aspect de l'invention, il est fourni un substrat transparent muni d'un empilement fonctionnel de couches minces tel que décrit dans la revendication 1, les revendications dépendantes étant des modes avantageux de réalisation.

Selon un deuxième aspect de l'invention, il est fourni un vitrage comprenant un substrat transparent selon le premier aspect de l'invention.

Selon un troisième aspect de l'invention, il est fourni un procédé pour la fabrication d'un substrat transparent selon le premier aspect de l'invention.

### Avantages de l'invention

Un premier avantage de l'invention est qu'elle fournit un empilement fonctionnel « contrôle solaire » convenable, notamment pour des applications sur les marchés du bâtiment et de la construction. L'empilement fonctionnel satisfait à la triple exigence d'une transmission lumineuse élevée, une faible valeur faible de facteur solaire, et d'une faible émissivité. Il présente une sélectivité élevée et des performances énergétiques globales adaptées.

A titre d'exemples, un substrat transparent muni d'un empilement fonctionnel conformément au premier aspect de l'invention peut, par rapport à un empilement fonctionnel conventionnel, présenter une valeur de facteur solaire inférieure d'au moins 2%, voire d'au moins 4%, et une transmission lumineuse équivalente, voire supérieure d'au moins 1 %, voire d'au moins 2%.

Un deuxième avantage est que la couche d'oxyde de tungstène n'influe pas, du moins très peu, sur la couleur de l'empilement par rapport à un empilement fonctionnel conventionnel. Les spécifications en termes de couleurs sont ainsi toujours respectées lorsqu'une telle couche est introduite dans un empilement fonctionnel existant.

Un autre avantage de l'invention est que la couche d'oxyde de tungstène peut être déposée par une méthode de pulvérisation cathodique magnétron notamment à l'aide d'une cible d'oxyde de tungstène. Les empilements fonctionnels de couches minces étant généralement déposés par une méthode de pulvérisation cathodique magnétron, les procédés existants peuvent être plus aisément adaptés.

### Brève description des dessins

[Fig.1] une représentation schématique d'un premier mode de réalisation du premier aspect de l'invention.
[Fig.2] une représentation schématique d'un deuxième mode de réalisation du premier aspect de l'invention.
[Fig.3] est une représentation de l'évolution du coefficient d'extinction optique de plusieurs exemples de couche d'oxyde de tungstène dopé au césium en fonction de la longueur d'onde.
[Fig.4] est une représentation de l'évolution de l'indice de réfraction optique de plusieurs exemples de couche d'oxyde de tungstène dopé au césium en fonction de la longueur d'onde
[Fig.5] une représentation schématique d'un troisième mode de réalisation du premier aspect de l'invention.
[Fig.6] une représentation schématique d'un quatrième mode de réalisation du premier aspect de l'invention.
[Fig.7] une représentation schématique d'un cinquième mode de réalisation du premier aspect de l'invention.
[Fig.8] une représentation schématique d'un sixième mode de réalisation du premier aspect de l'invention
[Fig.9] est une représentation schématique d'un premier mode de réalisation d'un vitrage selon le deuxième aspect de l'invention.
[Fig.10] est une représentation schématique d'un deuxième mode de réalisation d'un vitrage selon le deuxième aspect de l'invention.
[Fig.11] est une représentation graphique de la transmission lumineuse et du facteur solaire pour dix-sept exemples de vitrage selon l'invention et quatre contre-exemples.
[Fig.12] est une représentation graphique de la réflexion lumineuse en face intérieur et face extérieur pour dix-sept exemples de vitrage selon l'invention et quatre contre-exemples.
[Fig.13] est une représentation graphique des paramètres de couleur a* et b* en transmission, en réflexion interne et en réflexion externe pour dix-sept exemples de vitrage selon l'invention et quatre contre-exemples.

### Description détaillée de modes de réalisation

Il fait usage des définitions et conventions suivantes.

Le terme « au-dessus », respectivement « en-dessous », qualifiant la position d'une couche ou d'un ensemble de couches et défini relativement à la position d'une autre couche ou d'un autre ensemble, signifie que ladite couche ou ledit ensemble de couches est plus proche, respectivement plus éloigné, du substrat. Ces deux termes, « au-dessus » et « en-dessous », ne signifient nullement que la couche ou l'ensemble de couches qu'ils qualifient et l'autre couche ou l'autre ensemble par rapport auquel ils sont définis soient en contact. Ils n'excluent pas la présence d'autres couches intermédiaires entre ces deux couches. L'expression « en contact » est explicitement utilisée pour indiquer qu'aucune autre couche n'est disposée entre eux.

Sans aucune précision ou qualificatif, le terme « épaisseur » utilisé pour une couche correspond à l'épaisseur physique, réel ou géométrique, e, de ladite couche. Elle est exprimée en nanomètres.

L'expression « module diélectrique » désigne une ou plusieurs couches en contact les unes avec les autres formant un ensemble de couches globalement diélectrique, c'est-à-dire qu'il n'a pas les fonctions d'une couche fonctionnelle métallique. Si le module diélectrique comprend plusieurs couches, celles-ci peuvent elles-mêmes être diélectriques. L'épaisseur physique, réelle ou géométrique, d'un module diélectrique de couches, correspond à la somme des épaisseurs physiques, réelles ou géométriques, de chacune des couches qui le constituent.

Dans la présente description, les expressions « une couche de » ou « une couche à base de », utilisées pour qualifier un matériau ou une couche quant à ce qu'il ou elle contient, sont utilisées de manière équivalente. Elles signifient que la fraction massique du constituant qu'il ou elle comprend est d'au moins 50%, en particulier au moins 70%, de préférence au moins 90%. En particulier, la présence d'éléments minoritaires ou dopants n'est pas exclue.

Par le terme « transparent », utilisé pour qualifier un substrat, signifie que le substrat est de préférence incolore, non opaque et non translucide afin de minimiser l'absorption de la lumière et ainsi conserver une transmission lumineuse maximale dans le spectre électromagnétique visible.

Par « transmission lumineuse », il est entendu la transmission lumineuse, notée TL, telle que définie et mesurée dans la section 4.2 de la norme EN 410.

La transmission lumineuse, TL, dans le spectre visible, le facteur solaire, g, et la sélectivité, s, la réflexion interne, Rint, et la réflexion externe, Rext, dans le spectre visible, ainsi que leurs modes de mesure et/ou calcul sont définis dans les normes EN 410, ISO 9050 et ISO 10292.

Conformément à la nomenclature de l'IUPAC, le groupe 1 des éléments chimiques comprend l'hydrogène et les éléments alcalins, c'est-à-dire le lithium, le sodium, le potassium, le rubidium, le césium et le francium.

Par les expressions « indice de réfraction optique » et de « coefficient d'extinction optique », il est entendu l'indice de réfraction optique, n, et de coefficient d'extinction optique, k, tels que définis dans le domaine technique, notamment selon le modèle de Forouhi & Bloomer décrit dans l'ouvrage Forouhi & Bloomer, Handbook of Optical Constants of Solids II, Palik, E.D. (ed.), Academic Press, 1991, Chapter 7.

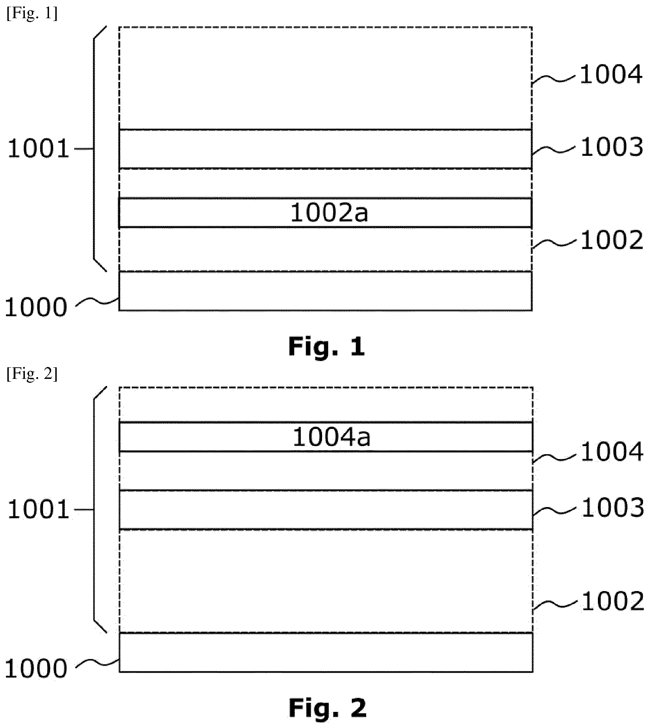

Selon un premier aspect de l'invention, en référence aux [Fig.1] et [Fig.2], il est fourni un substrat transparent (1000) muni d'un empilement fonctionnel (1001) de couches minces sur au moins une de ses faces (1000a, 1000b), ledit empilement fonctionnel (1001) comprenant, en partant du substrat (1000) :
- au moins une couche fonctionnelle métallique (1003) placée entre deux modules diélectriques (1002,1004) de couches minces, et dans lequel
   au moins un des modules diélectriques (1002,1004) de couches minces comprend une couche (1002a,1004a) d'oxyde de tungstène, et
   l'oxyde de tungstène comprend au moins un élément dopant sélectionné parmi les éléments chimiques du groupe 1 selon la nomenclature de l'IUPAC.

De manière surprenante, une couche d'oxyde de tungstène comprenant un élément dopant choisi par les éléments du groupe 1 selon la nomenclature de l'IUPAC présente des caractéristiques optiques inattendues, notamment en termes d'évolution du coefficient d'extinction optique et d'indice de réfraction en fonction de la longueur d'onde du rayonnement électromagnétique. Ces caractéristiques combinées à la présence d'une couche fonctionnelle métallique ont un effet synergique sur l'augmentation de la sélectivité.

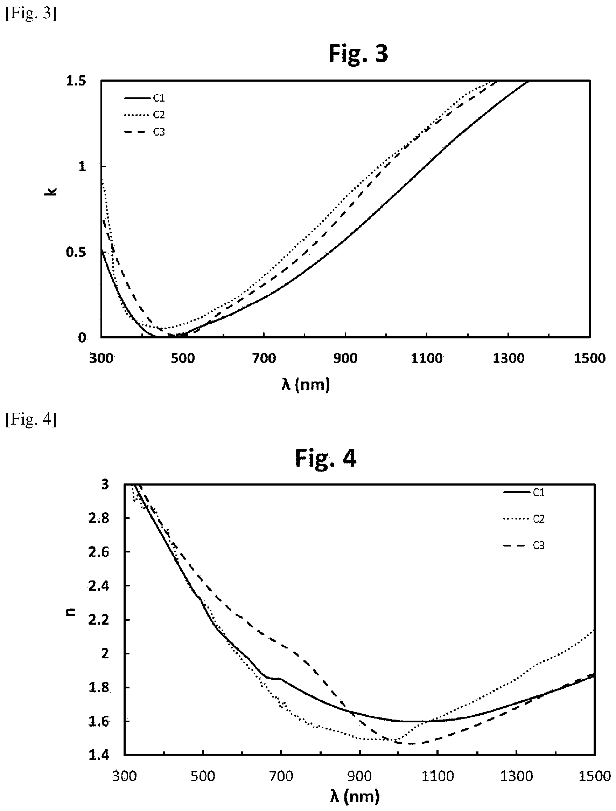

A titre d'exemples illustratifs et explicatifs, auxquels cependant la présente invention ne doit pas être considérée comme inextricablement liée, les évolutions du coefficient d'extinction optique, k, et de l'indice de réfraction optique, n, pour une couche d'oxyde de tungstène dopé au césium déposée par pulvérisation cathodique sur un substrat en verre silico-sodo-calcique selon trois conditions de dépôt sont représentées sur les [Fig.3] et [Fig.4] respectivement. Le rapport molaire du césium sur le tungstène est d'environ 0,05-0,06.

Les couches C1, C2 et C3 ont été déposées sur un substrat en verre silico-sodo-calcique sur lequel a été préalablement déposée une première couche à base de nitrure de silicium d'une épaisseur d'environ 5nm. Elles ont été ensuite recouvertes d'une deuxième couche à base de nitrure de silicium d'une épaisseur d'environ 5nm. Autrement dit, chaque couche C1, C2 et C3 est encapsulée entre deux couches à base nitrure de silicium.

L'encapsulation des couches C1, C2 et C3 par deux couches à base nitrure de silicium a pour fonction de prévenir la dégradation des couches C1, C2 et C3 d'une oxydation trop importante et/ou d'une diffusion trop importante d'oxygène dans leur structure. A la place du nitrure de silicium, il est possible d'utiliser tout autre type de nitrure adapté tel que, par exemple, le nitrure de zirconium.

La couche C1 a été déposée sous une atmosphère comprenant 25% de dioxygène à une pression de 4 mTorr, la couche C2 sous une atmosphère comprenant 20% de dioxygène à une pression de 4 mTorr et la couche C3 sous une atmosphère comprenant 5% de dioxygène à une pression de 10 mTorr.

Les empilements ainsi obtenus comprenant les couches C1, C2 et C3 ont été recuites à 650°C pendant 10 min après dépôt.

Le coefficient d'extinction et l'indice de réfraction ont été calculés par modélisation à partir de mesures expérimentales. Les mesures ont été obtenues à l'aide d'un spectrophotomètre Perkin Elmer Lambda 900 et d'un ellisopmètre VASE M-2000XI J.A. Wollam.

En référence à la [Fig.3], quelle que soit la couche C1, C2 ou C3, le coefficient d'extinction décroit de façon monotone depuis une valeur inférieure à 1 à 300 nm pour atteindre un palier minimum inférieur à 0,1 entre environ 400nm et 550nm, puis croît de manière monotone pour atteindre une valeur supérieure à 1,2 vers 1200nm. Les couches C1, C2 et C3 présentent une forte absorption dans le proche infrarouge et une certaine transparence dans le domaine visible du spectre électromagnétique.

En référence à la [Fig.4], quelle que soit la couche C1, C2 ou C3, l'indice de réfraction optique décroit de façon monotone depuis une valeur proche de 3 à 300 nm pour atteindre un palier minimum inférieur à 1,8, voire 1,6 entre environ 800nm et 1100nm, puis croît de manière monotone pour atteindre une valeur supérieure à 1,8, voire 2 vers 1300-1400nm. Les évolutions de l'indice de réfraction optique et du coefficient d'extinction optique présentent une certaine variation entre les trois couches C1, C2 et C3. Cette variabilité très modérée est probablement due aux conditions de dépôt et n'est pas préjudiciable pour obtenir les avantages de la présente invention.

Selon d'autres modes préférés de réalisation, l'indice de réfraction optique de la couche (1002a, 1004a) d'oxyde de tungstène est décroissant monotone avec la longueur d'onde à partir d'une valeur maximale supérieure à 2,4 à 350nm jusqu'à une valeur minimale entre 600nm et 900nm de sorte que la différence entre la valeur maximale et la valeur minimale est supérieure à 0,8, de préférence à 1,0, voire à 1,4.

Autrement dit, la valeur de l'indice de réfraction optique décroit de manière monotone d'au moins 0,8, de préférence d'au moins 1,0, voire au moins 1,4 entre une valeur maximale supérieure à 2,4 à 350nm et une valeur minimale entre 600nm et 900nm. A titre d'exemple, la valeur d'indice de réfraction optique peut décroitre de manière monotone d'au moins 0,8, de préférence d'au moins 1,0, voire au moins 1,4 entre une valeur maximale supérieure à 2,4 à 350nm et une valeur minimale inférieure à 2,3 entre 600nm et 900nm, notamment entre 800nm et 900nm.

Sans qu'elles soient particulièrement requises pour obtenir les effets de la présente invention, ces valeurs d'indice de réfraction optique peuvent néanmoins être avantageuses quant au respect des spécifications en termes de couleur pour des applications sur les marchés du bâtiment et de la construction. En particulier, elles permettent l'obtention de couleurs neutres.

Selon certains modes complémentaires préférés de réalisation, le coefficient d'extinction optique de la couche 1002a,1004a d'oxyde de tungstène peut être inférieur à 0,2, voire 0,1 à 500nm et inférieur à 2, voire 1,5 à 1200nm. La sélectivité peut ainsi être favorablement davantage augmentée.

Le coefficient d'extinction optique et l'indice de diffraction optique peuvent varier selon la nature et la quantité de ou des éléments dopants sélectionnés parmi les éléments du groupe 1 selon la nomenclature de l'IUPAC. Ils peuvent notamment présenter des comportements différents de ce qui a été décrit précédemment dans le cadre des exemples illustratifs et explicatifs des [Fig.3] et [Fig.4]. Il est cependant actuellement difficile d'établir une loi de comportement général du coefficient d'extinction optique et de l'indice de réfraction selon la nature et/ou la quantité de ou des éléments dopants.

Selon certains modes particuliers de réalisation, la couche 1002a,1004a d'oxyde de tungstène comprend l'élément dopant X ou les éléments dopants X1,X2,... dans des proportions telles que le rapport molaire, X/W dudit élément sur le tungstène , W, ou la somme des rapports molaires de chaque élément sur le tungstène (X1+X2+...)/W est comprise entre 0,01 et 0,4, de préférence entre 0,01 et 0,2, voire entre 0,01 et 0,1. Il a été constaté que ces valeurs de rapport molaire peuvent avantageusement permettre d'obtenir les valeurs de coefficient d'extinction optique et d'indice de réfraction décrites dans les modes de réalisation précédents tout en limitant la quantité d'éléments dopants. En outre, une économie sur l'exploitation des ressources minérales pour les éléments dopants peut éventuellement en résulter, ainsi qu'une diminution des coûts.

Selon certains modes de réalisation, la couche 1002a,1004a d'oxyde de tungstène comprend au moins un élément dopant sélectionné parmi l'hydrogène, le lithium, le sodium, le potassium et le césium. Parmi les éléments du groupe 1, ces éléments particuliers peuvent permettre d'obtenir les valeurs de coefficient d'extinction optique et d'indice de réfraction les plus optimales pour les effets techniques recherchés.

Selon des modes particulièrement préférés, la couche 1002a, 1004a d'oxyde de tungstène comprend le césium comme élément dopant, et le rapport molaire du césium sur le tungstène est compris entre 0,01 et 0,2, de préférence entre 0,01 et 0,1. Ces modes de réalisation permettent d'obtenir les meilleures performances quant à l'augmentation de la sélectivité, la préservation de couleurs neutres, et à l'économie sur les coûts.

Le substrat transparent 1000 peut être de préférence plan et peut être de nature organique ou inorganique, rigide ou flexible. En particulier, il peut être un verre minéral, par exemple un verre silico-sodo-calcique.

Des exemples de substrats organiques pouvant être avantageusement utilisés pour la mise en œuvre de l'invention peuvent être les matériaux polymères tels que les polyéthylènes, les polyesters, les polyacrylates, les polycarbonates, les polyuréthanes, les polyamides. Ces polymères peuvent être des polymères fluorés.

Des exemples de substrats minéraux pouvant être avantageusement mis en œuvre dans l'invention peuvent être les feuilles de verre minéral ou vitrocéramique. Le verre peut être de préférence un verre de type silico-sodo-calcique, borosilicate, aluminosilicate ou encore alumino-boro-silicate. Selon un mode préféré de réalisation de l'invention, le substrat transparent 1000 est une feuille de verre minéral silico-sodo-calcique.

En référence à la [Fig.1], selon des modes avantageux de réalisation, la couche 1002a d'oxyde de tungstène peut être comprise dans le module diélectrique 1002 de couches situées sous la couche fonctionnelle métallique 1003, entre ledit substrat 1000 et ladite couche fonctionnelle métallique 1003. La présence de la couche d'oxyde de tungstène 1002a dans le module diélectrique 1002 de couches situées sous la couche fonctionnelle métallique 1003 permet à la fois de réduire la valeur de facteur solaire et/ou d'augmenter la transmission lumineuse.

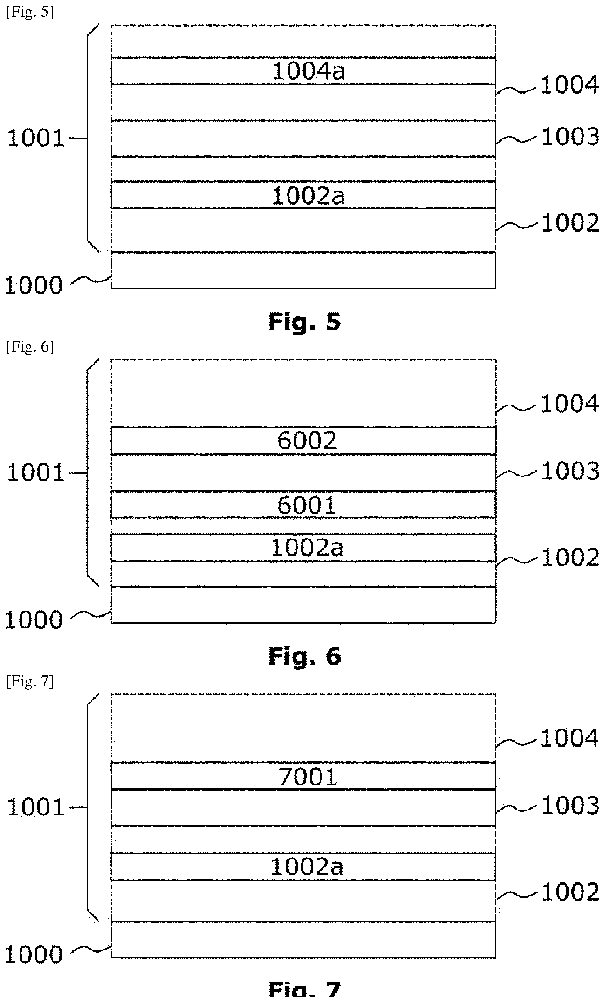

En référence à la [Fig.5], selon des modes préférés de réalisation, chaque module diélectrique 1002,1004 de couches comprend une couche 1002a,1004a d'oxyde de tungstène. La présence de la couche d'oxyde de tungstène 1002a, 1004a dans chaque module diélectrique 1002,1004 permet les réductions plus importantes du facteur solaire et les augmentations les plus importantes de la transmission lumineuse.

Selon certains modes avantageux de réalisation, l'épaisseur physique de la ou des couches 1002a,1004a d'oxyde de tungstène peuvent être comprises entre 2nm et 50nm, en particulier entre 5 nm et 30 nm, de préférence entre 5nm et 20 nm. Ces intervalles d'épaisseurs sont suffisants pour obtenir les avantages remarquables du premier aspect de l'invention.

Selon des modes de réalisation, en référence à la [Fig.6], l'empilement fonctionnel 1001 de couches comprend en outre une surcouche métallique 6002 de blocage, de préférence à base d'alliage nickel et chrome, située au-dessus et en contact de la couche fonctionnelle métallique 1003 et/ou une sous-couche métallique 6001 de blocage, de préférence à base d'alliage nickel et chrome, située en-dessous et en contact de la couche fonctionnelle métallique 1003.

La présence d'une surcouche métallique 6002 de blocage et/ou d'une sous-couche métallique 6001 de blocage permet d'augmenter avantageusement la durabilité de l'empilement, par exemple en termes de résistance mécanique au brossage ou à la rayure. Elle permet également d'éviter la détérioration, par exemple l'oxydation, de la couche fonctionnelle métallique 1003 lors du dépôt des couches subséquentes et/ou lors de traitements thermiques, notamment en limitant la diffusion de certains éléments chimiques depuis les couches adjacentes et/ou la diffusion de l'oxygène.

Selon d'autres modes de réalisation, en référence à la [Fig.7], l'empilement fonctionnel 1001 de couches minces peut comprendre en outre une surcouche d'oxyde de titane 7001 située au-dessus, de préférence en contact, de la couche fonctionnelle métallique 1003, ladite surcouche 4000 ayant, de préférence, une épaisseur physique d'au moins 5 nm. La surcouche d'oxyde de titane 7001 permet d'augmenter la sélectivité.

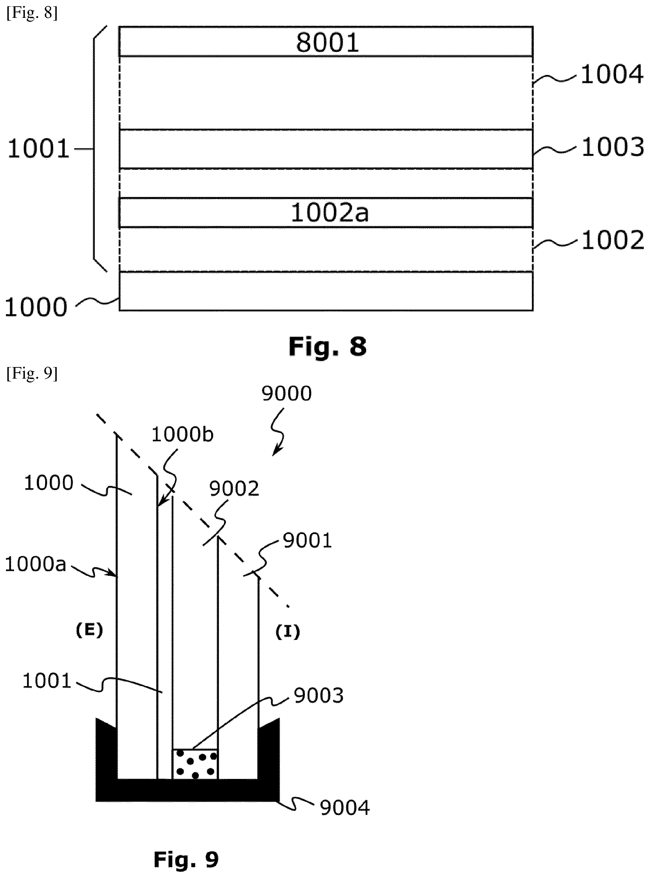

Selon des modes particuliers de réalisation, en référence à la [Fig.8], l'empilement fonctionnel 1001 de couches comprend une couche 8001 d'indice de réfraction inférieur à 2,45 à 550nm, ladite couche étant comprise dans le module diélectrique 1004 de couches formant la partie supérieure de l'empilement fonctionnel 1001 en partant du substrat 1000. De préférence, ladite couche 8001 est la dernière couche du module diélectrique 1004.

La combinaison d'une couche d'indice de réfraction inférieur à 2,45 à 550nm dans le dernier module diélectrique 1004 avec une couche 1002a, 1004a d'oxyde de tungstène dans le premier et/ou deuxième modules diélectriques 1002,1004 permet de prévenir toute dégradation structurelle de la ou les couches 1002a, 1004a, d'oxyde de tungstène par la diffusion éventuelle d'éléments, tels que l'oxygène, depuis les couches adjacentes.

Selon d'autres modes particuliers de réalisation, l'empilement fonctionnel 1001 de couches comprend une couche d'indice de réfraction inférieur à 2,45 à 550nm, ladite couche étant comprise dans le module diélectrique 1002 de couches formant la partie inférieure de l'empilement fonctionnel 1001 en partant du substrat 1000.

Selon des modes préférés de réalisation, l'empilement fonctionnel 1001 de couches comprend une première couche d'indice de réfraction inférieur à 2,45 à 550nm, ladite première couche étant comprise dans le module diélectrique 1002 de couches formant la partie inférieure de l'empilement fonctionnel 1001 en partant du substrat 1000, et une deuxième couche d'indice de réfraction inférieur à 2,45 à 550nm, ladite deuxième couche étant comprise dans le module diélectrique 1004 de couches formant la partie supérieure de l'empilement fonctionnel 1001 en partant du substrat 1000.

La ou les couches d'indice de réfraction inférieur à 2,45 à 550nm sont de préférence à base d'oxyde ou de nitrure de silicium, de zirconium, de titane, ou encore d'étain et de zinc. A titre d'exemples, elles peuvent être à base de nitrure de silicium, d'oxyde de silicium, de nitrure de zirconium ou de d'oxyde de zinc et d'étain.

La couche fonctionnelle métallique 1003 a pour fonction de réfléchir les rayonnements infrarouges et/ou d'une partie du rayonnement solaire. Elle peut être de tout métal adapté, par exemple à base d'or ou à base d'argent. L'épaisseur de la couche fonctionnelle métallique 1003 peut être typiquement comprise entre 2nm et 25nm, de préférence entre 10nm et 20nm.

Selon des modes préférés de réalisation, la couche fonctionnelle métallique 1003 est une couche à base d'argent.

Les modules diélectriques peuvent comprendre une ou plusieurs couches à d'oxydes et/ou de nitrures d'éléments métalliques et/ou d'alliages métalliques, tels que, par exemple, l'oxyde de zinc, l'oxyde mixte de zinc et d'étain, le nitrure de silicium, l'oxyde de silicium, le nitrure de zirconium, l'oxyde de titane, l'oxyde d'étain, et l'oxy-nitrure de silicium.

Les procédés de dépôts de couches minces sur des substrats, notamment des substrats verriers, sont des procédés bien connus dans l'industrie. A titre d'exemple, le dépôt d'un empilement de couches minces sur un substrat verrier, est réalisé par les dépôts successifs de chaque couche mince dudit empilement en faisant passer le substrat en verre à travers une succession de cellules de dépôt adaptées pour déposer une couche mince donnée.

Les cellules de dépôt peuvent utiliser des méthodes de dépôt telles que la pulvérisation assistée par champ magnétique (également appelée pulvérisation magnétron), le dépôt assisté par faisceau d'ions (IBAD), l'évaporation, le dépôt chimique en phase vapeur (CVD), le dépôt chimique en phase vapeur assisté par plasma (PECVD), le dépôt chimique en phase vapeur à basse pression (LPCVD), etc.

Le procédé de dépôts par pulvérisation assistée par champ magnétique sont particulièrement utilisés. Les conditions de dépôt de couches sont largement documentées dans la littérature, par exemple dans les demandes de brevet WO2012/093238 A1 et WO2017/00602 A1.

Un deuxième aspect de l'invention concerne un vitrage, en particulier simple, double ou triple vitrage, comprenant un substrat transparent selon l'un des quelconques modes de réalisation décrits.

Un vitrage monolithique comprend un seul substrat, en particulier une feuille de verre minéral. Il peut s'agir d'un simple vitrage. Lorsque le substrat selon l'invention est utilisé comme vitrage monolithique, l'empilement fonctionnel de couches minces est de préférence déposé sur la face du substrat orientée vers l'intérieur de la pièce du bâtiment sur les murs de laquelle le vitrage est installé. Dans une telle configuration, il peut être avantageux de protéger la première couche et éventuellement l'empilement de couches minces contre les dégradations physiques ou chimiques à l'aide d'un moyen approprié.

Un vitrage multiple comprend au moins deux substrats, en particulier des feuilles de verre minéral, parallèles séparées par une lame de gaz isolant. La plupart des vitrages multiples sont des doubles ou triples vitrages, c'est-à-dire qu'ils comprennent respectivement deux ou trois vitrages. Lorsque le substrat selon l'invention est utilisé comme élément d'un vitrage multiple, l'empilement fonctionnel de couches minces est de préférence déposé sur la face de la feuille de verre orientée vers l'intérieur en contact avec le gaz isolant. Cette disposition a pour avantage de protéger l'empilement des dégradations chimiques ou physiques de l'environnement extérieur.

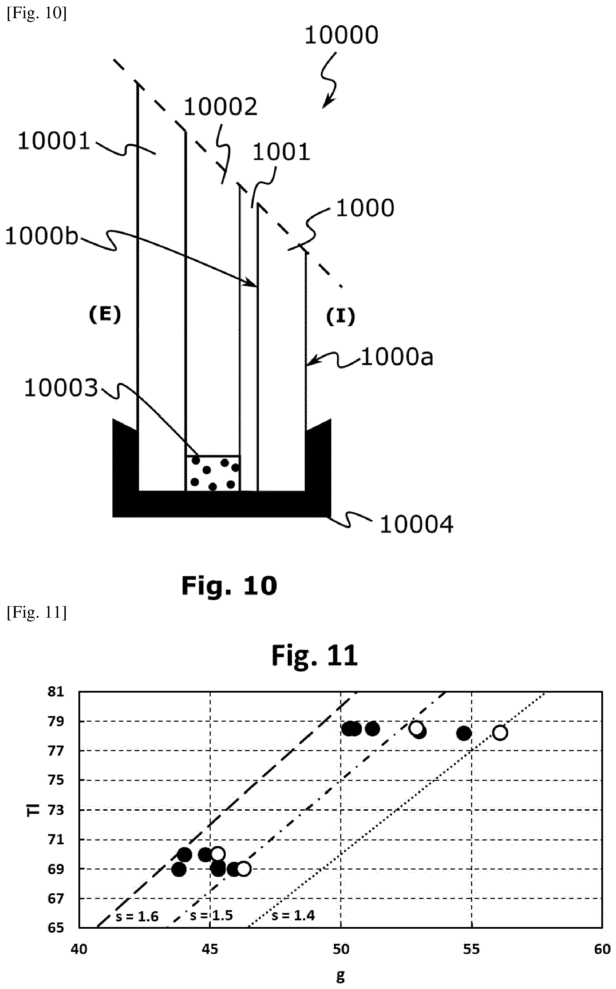

Selon des modes préférés de réalisation, en référence aux [Fig.9] et [Fig.10], le vitrage est un double vitrage 9000, 10000 comprenant un substrat transparent 1000 selon l'une selon l'un des quelconques modes de réalisation décrits précédemment disposé de sorte que l'empilement fonctionnel 1001 de couches est situé face deux et/ ou en face trois dudit vitrage 9000, 10000. Sur la figure, (E) correspond à l'extérieur du local où le vitrage est installé, et (I) à l'intérieur du local.

Selon un premier mode de réalisation, en référence à la [Fig.9], le vitrage 9000 comprend une première feuille de verre transparent 1000 avec une surface interne 1000a et une surface externe 1000b, une deuxième feuille de verre transparent 9001 avec une surface interne 9001a et une surface externe 9001b, une lame de gaz isolant 9002, un espaceur 9003 et un joint de scellement 9004.

La feuille de verre 1000 comprend, sur et en contact de sa surface intérieure 1000b en contact avec le gaz de la lame de gaz isolant 9002, un empilement fonctionnel 1001 selon le premier aspect de l'invention. L'ensemble fonctionnel 1001 est, de préférence, disposé de sorte que sa surface externe qui est opposée à celle 1000b de la feuille de verre transparent 1000 est orientée vers l'intérieur (I) du local, par exemple un bâtiment, dans lequel le vitrage est utilisé. Autrement dit, l'empilement fonctionnel 1001 est disposé en face 2 du vitrage en partant de l'extérieure (E).

Selon un autre mode de réalisation, en référence à la [Fig.10], le vitrage est un double vitrage 10000 comprenant une première feuille de verre transparent 1000 avec une surface interne 1000a et une surface externe 1001b, une deuxième feuille de verre transparent 10001 avec une surface interne 1001a et une surface externe 1001b, une lame de gaz isolant 10004, un espaceur 10003 et un joint de scellement 10004.

La feuille de verre 1000 comprend, sur et en contact de sa surface intérieure 1000a en contact avec le gaz de la lame de gaz isolant 9004, un empilement fonctionnel 1001 selon le premier aspect de l'invention. L'ensemble fonctionnel 1001 est, de préférence, disposé de sorte que sa surface externe qui est opposée à celle 1000a de la feuille de verre transparent 1000 est orientée vers l'extérieur (E) du local. Autrement dit, l'empilement fonctionnel (1001) est disposé en face 3 du vitrage en partant de l'extérieure (E).

Selon un troisième aspect de l'invention, il est fourni un procédé de fabrication d'un substrat transparent selon le premier aspect de l'invention, tel que la couche d'oxyde de tungstène est déposée par une méthode de pulvérisation cathodique magnétron à l'aide d'une cible en oxyde de tungstène dopé à l'aide d'un élément chimique choisi parmi les éléments chimiques du groupe 1 selon la nomenclature de l'IUPAC.

La cible en oxyde de tungstène peut notamment contenir un ou plusieurs éléments dopants dans les proportions telles que décrites pour la couche d'oxyde de tungstène dopé dans certains modes de réalisation du premier aspect de l'invention.

La ou les couches de tungstène peuvent à être déposées par pulvérisation cathodique à l'aide de la cible susmentionnée sous une atmosphère comprenant 0% à 50%, de préférence 5% à 25% de dioxygène sous une pression comprise en entre 1 à 15mTorr, de préférence de 3 à 10mTorr. De préférence, le dépôt peut être réalisé à froid, c'est-à-dire à une température inférieure à 100°C, notamment comprise entre 20°C et 60°C, pour le substrat.

Tous les modes de réalisation décrits, qu'ils concernent le premier ou deuxième aspect de l'invention, peuvent être combinés entre eux sans modification ou adaptation particulière. Dans l'éventualité où des incompatibilités techniques apparaitraient lors de la mise œuvre d'une de ces combinaisons, il est à la portée de l'homme du métier de pouvoir les résoudre à l'aide de ses connaissances sans que cela ne requiert des efforts indus, notamment par la mise en œuvre d'un programme de recherche.

### Exemples

Les caractéristiques et avantages de l'invention sont illustrés par les exemples et contre-exemples décrits ci-après.

Dix-sept exemples, E1 - E17, conformément à l'invention sont décrits dans les tableaux 1, 2 et 3 qui indiquent la composition et l'épaisseur exprimée en nanomètres des différentes couches. Les nombres dans les deux premières colonnes correspondent aux références des figures.

La couche, notée CWO, d'oxyde de tungstène dopé au césium. Le rapport molaire du césium sur le tungstène est d'environ 0,05-0,06.

| **Tab. 1** | | | **E1** | **E2** | **E3** | **E4** | **E5** | **E6** |
|---|---|---|---|---|---|---|---|---|
| | | TiOx | 1.5 | 1.5 | 1.5 | 1.5 | 1.5 | 1.5 |
| **1004** | | SiN | 41 | 42 | 41 | 17 | 41 | 24 |
| | | SnZnO | | | | 5 | | |
| | | SiZr | | | | | | |
| | **1004a** | CWO | | | | | | 19 |
| | **7001** | TiOx | | | | 20 | | |
| | | ZnO | 5 | 5 | 5 | | 5 | 5 |
| | **6002** | NiCrO x | 0.6 | 0.6 | 0.6 | 0.6 | 0.6 | 0.6 |
| **1003** | | Ag | 16.6 | 16.6 | 17.0 | 17.5 | 16.6 | 16.3 |
| **1002** | | ZnO | 5 | 5 | 5 | 5 | 5 | 5 |
| | **1002a** | CWO | 17 | 10 | 10 | 19 | 17 | 18 |
| | | SiZr | | | | | | |
| | | SiN | 9 | 17 | 12 | 5 | 9 | 5 |
| **1000** | | verre | 4mm | 4mm | 4mm | 4mm | 4mm | 4mm |

| **Tab. 2** | | | **E7** | **E8** | **E9** | **E10** | **E11** | **E12** |
|---|---|---|---|---|---|---|---|---|
| | | TiOx | 1.5 | 1.5 | 1.5 | 1.5 | 1.5 | 1.5 |
| **1004** | | SiN | 41 | 30 | 17 | 13 | 24 | 35 |
| | | SnZnO | | | 5 | 10 | 6 | |
| | | SiZr | | | | | | |
| | **1004a** | CWO | | 11 | | | | |
| | **7001** | TiOx | | | 20 | 20 | 14 | |
| | | ZnO | 5 | 5 | | | | 5 |
| | **6002** | NiCrO x | 0.6 | 0.6 | | | | 0.6 |
| **1003** | | Ag | 17.0 | 17.4 | 17.5 | 18.3 | 18.5 | 12.9 |
| **1002** | | ZnO | 5 | 5 | 5 | 5 | 5 | 5 |
| | **1002a** | CWO | 10 | 15 | 19 | 19 | 16 | 15 |
| | | SiZr | | | | | | |
| | | SiN | 12 | 5 | 5 | 5 | 5 | 22 |
| **1000** | | verre | 4mm | 4mm | 4mm | 4mm | 4mm | 4mm |

| **Tab. 3** | | | **E13** | **E14** | **E15** | **E16** | **E17** |
|---|---|---|---|---|---|---|---|
| | | TiOx | 1.5 | 1.5 | 1.5 | 1.5 | 1.5 |
| **1004** | | SiN | 18 | 21 | 5 | 5 | 19 |
| | | SnZnO | | | 10 | 5 | 5 |
| | | SiZr | | | | | |
| | **1004a** | CWO | 20 | 15 | | | 12 |
| | **7001** | TiOx | | | 20 | 25 | 5 |
| | | ZnO | 5 | 5 | | | |
| | **6002** | NiCrO x | 0.6 | 0.6 | | | |
| **1003** | | Ag | 12.6 | 14.2 | 13.2 | 14.8 | 14.8 |
| **1002** | | ZnO | 5 | 5 | 5 | 5 | 5 |
| | **1002a** | CWO | 23 | 20 | 18 | 24 | 20 |
| | | SiZr | | | | | |
| | | SiN | 5 | 5 | 19 | 5 | 5 |
| **1000** | | verre | 4mm | 4mm | 4mm | 4mm | 4mm |

Les exemples E1 à E5, E7, E9 à E12, E15 et E16 ne comprennent qu'une couche 1002a d'oxyde de tungstène dopé dans le premier module diélectrique 1002. Les exemples E6, E8, E13 à E14 et E17 comprennent deux couches 1002a,1004a d'oxyde de tungstène dopé situé dans la premier 1002 et deuxième 1004 modules diélectriques. Les contre-exemples correspondant sont les contre-exemples CE1 et CE3.

Les exemples E9 à E11 et les exemples E15 à E17 sont des exemples conformes à certains modes avantageux de réalisation dans lesquels une couche 7001 à base d'oxyde de titane est située au-dessus et en contact de la couche 1003 fonctionnelle métallique. Les contre-exemples correspondant sont les contre-exemple CE2 et CE4.

Quatre contre-exemples, CE1 - CE4 sont décrits dans le tableau 4 qui indique la composition et l'épaisseur exprimée en nanomètres des différentes couches.

| **Tab. 3** | | | **CE1** | **CE2** | **CE3** | **CE4** |
|---|---|---|---|---|---|---|
| | | TiOx | 1.5 | 1.5 | 1.5 | 1.5 |
| **1004** | | SiN | 40 | 30 | 37 | 25 |
| | | SnZnO | | | | |
| | | SiZr | | | | |
| | **1004a** | CWO | | | | |
| | **7001** | TiOx | | 5 | | 10 |
| | | ZnO | 5 | | 5 | |
| | **6002** | NiCrOx | 0.6 | | 0.6 | |
| **1003** | | Ag | 17.0 | 18.5 | 13.4 | 15.7 |
| **1002** | | ZnO | 5 | 5 | 5 | 5 |
| | **1002a** | CWO | | | | |
| | | SiZr | | 14 | | 23 |
| | | SiN | 22 | 5 | 28 | 0 |
| **1000** | | verre | | | | |

Les empilements de couches minces des dix-sept exemples E1 - E17 et des contre-exemples CE1 - CE4 ont été déposés par pulvérisation cathodique assistée par un champ magnétique (procédé magnétron) dont les caractéristiques sont largement documentées dans la littérature, par exemple dans les demandes de brevet WO2012/093238 et WO2017/00602. Le substrat 1000 est un verre minéral silico-sodo-calcique de 4 mm d'épaisseur. Après dépôt, les substrats ont fait l'objet d'un traitement thermique à 650°C pendant 10 min.

La nature des cibles utilisées et les conditions de dépôts des exemples E1 à E17 et des contre-exemples CE1 - CE4 sont regroupées dans le tableau 5.

| **Tab. 5** | **Cible** | **Pressio n (µbar)** | **Ar (sccm)** | **O2 (sccm)** | **N2 (sccm)** | **Power (W)** |
|---|---|---|---|---|---|---|
| TiOx | TiOx | 2 | 10 | 2 | 0 | 2000 |
| SnZnO | Sn60Zn40 | 2 | 7 | 44 | 0 | 1000 |
| SiN | SiN | 5 | 7 | 0 | 14 | 2000 |
| SiZr | Si:ZR 27 wt. % | 2 | 15 | 0 | 15 | 1000 |
| NiCrO x | NiCr | 2 | 20 | 0 | 0 | 70 |
| Ag | Ag | 8 | 40 | 0 | 0 | 210 |
| ZnO | ZnO:Al 2 wt. % | 2 | 40 | 2 | 0 | 1300 |
| CWO | CWO | 4-10 | 30-40 | 2-10 | 0 | 1300 |

Le facteur solaire, g, la sélectivité, s, la transmission lumineuse, T1, la réflexion lumineuse en face intérieure, Rint, et en face extérieure, Rext, ainsi que la couleur en transmission, en face intérieure et en face extérieure, ont été mesurés pour chaque substrat des exemples E1 à E17 et des contre-exemples CE1 à CE4 assemblé dans un double vitrage, tel qu'illustré sur la [Fig.9]. La deuxième feuille 9001 de verre est un verre minéral sodo-silico calcique d'une épaisseur de 4 mm. L'épaisseur de la lame 9002 d'air est de 16 mm. L'empilement est disposé en face 2, soit sur la face 1001b du substrat 1000.

Par l'expression « couleur », utilisée pour qualifier un substrat transparent muni d'un empilement, il est entendu la couleur telle que définie dans l'espace chromatique L*a*b* CIE 1976 selon la norme ISO 11664, notamment avec un illuminant D65 et un champ visuel de 2° ou 10° pour l'observateur de référence. Elle est mesurée conformément à ladite norme.

La transmission lumineuse dans le spectre visible, TL, le facteur solaire, g, et la sélectivité, s, et la réflexion interne, Rint, et la réflexion externe, Rext, dans le spectre visible sont définis, mesurés et calculés en conformité avec les normes EN 410, ISO 9050 et/ou ISO 10292.

Les mesures de facteur solaire, de sélectivité, de transmission lumineuse, de réflexion interne et de réflexion externe sont regroupées dans le tableau 6. Les mesures des paramètres de couleur a* et b*, en transmission (a*T, b*T), en réflexion externe (a*Rext, b*Rext) et en réflexion interne (a*Rint, b*Rint) sont regroupées dans le tableau 7.

| **Tab. 6** | **g** | **s** | **T1** | **Rint** | **Rext** |
|---|---|---|---|---|---|
| **E1** | 45,3 | 1,523 | 69,0 | 20,8 | 20,0 |
| **E2** | 45,9 | 1,503 | 69,0 | 21,0 | 20,0 |
| **E3** | 45,3 | 1,528 | 69,2 | 22,6 | 20,8 |
| **E4** | 43,8 | 1,575 | 69,0 | 20,7 | 19,1 |
| **E5** | 45,3 | 1,523 | 69,0 | 20,8 | 20,0 |
| **E6** | 44,8 | 1,564 | 70,0 | 23,7 | 21,7 |
| **E7** | 45,3 | 1,528 | 69,2 | 22,6 | 20,8 |
| **E8** | 44,0 | 1,593 | 70,0 | 23,4 | 21,3 |
| **E9** | 43,8 | 1,575 | 69,0 | 20,7 | 19,1 |
| **E10** | 44,0 | 1,593 | 70,0 | 23,2 | 20,8 |
| **E11** | 44,0 | 1,592 | 70,0 | 23,2 | 20,9 |
| **E12** | 54,7 | 1,428 | 78,2 | 12,1 | 12,4 |
| **E13** | 52,9 | 1,485 | 78,5 | 15,0 | 14,0 |
| **E14** | 50,5 | 1,554 | 78,5 | 14,6 | 13,7 |
| **E15** | 53,0 | 1,478 | 78,3 | 11,5 | 11,8 |
| **E16** | 51,2 | 1,534 | 78,5 | 14,5 | 13,5 |
| **E17** | 50,3 | 1,561 | 78,5 | 14,7 | 13,7 |
| **CE1** | 46,3 | 1,489 | 69,0 | 24,1 | 21,9 |
| **CE2** | 45,3 | 1,544 | 70,0 | 22,9 | 21,0 |
| **CE3** | 56,1 | 1,394 | 78,2 | 14,9 | 13,9 |
| **CE4** | 52,9 | 1,485 | 78,5 | 14,2 | 13,4 |

| **Tab. 7** | **a*T** | **b*T** | **a*Rext** | **b*Rext** | **a*Rint** | **b*Rint** |
|---|---|---|---|---|---|---|
| **E1** | -4,0 | -1,0 | 2,3 | -3,4 | 4,1 | -4,1 |
| **E2** | -4,1 | 1,3 | 2,3 | -3,7 | 4,5 | -5,9 |
| **E3** | -4,6 | 1,4 | 1,0 | -3,5 | 3,4 | -4,9 |
| **E4** | -4,1 | 0,6 | 1,7 | -6,8 | 3,8 | -7,2 |
| **E5** | -4,0 | -1,0 | 2,3 | -3,4 | 4,1 | -4,1 |
| **E6** | -3,9 | 3,0 | 3,0 | -5,1 | 4,6 | -7,1 |
| **E7** | -4,6 | 1,4 | 1,0 | -3,5 | 3,4 | -4,9 |
| **E8** | -4,1 | 3,0 | 2,2 | -2,8 | 4,0 | -5,0 |
| **E9** | -4,1 | 0,6 | 1,7 | -6,8 | 3,8 | -7,2 |
| **E10** | -4,0 | 3,0 | 2,9 | -4,5 | 4,4 | -6,1 |
| **E11** | -4,0 | 3,0 | 2,0 | -2,6 | 4,0 | -5,2 |
| **E12** | -3,5 | -1,0 | 3,0 | -4,7 | 4,9 | -2,9 |
| **E13** | -3,2 | 2,4 | 3,0 | -7,2 | 4,4 | -8,0 |
| **E14** | -3,8 | 3,0 | 2,5 | -4,8 | 4,3 | -6,1 |
| **E15** | -4,0 | 0,5 | 1,8 | -8,0 | 4,7 | -6,1 |
| **E16** | -3,5 | 3,0 | 3,0 | -7,2 | 4,3 | -8,0 |
| **E17** | -3,8 | 3,0 | 2,3 | -4,5 | 4,1 | -5,9 |
| **CE1** | -3,6 | 4 | 3,2 | -7,7 | 4,3 | -8,1 |
| **CE2** | -4,3 | 3,4 | 3,0 | -3,8 | 4,7 | -5,4 |
| **CE3** | -2,9 | 2,7 | 3,1 | -8,8 | 4,0 | -8,0 |
| **CE4** | -3,8 | 3,0 | 3,0 | -4,8 | 4,8 | -5,7 |

Les valeurs de transmission lumineuse, TL et de facteur solaire, g, sont représentées sur la [Fig.11] pour les exemples E1 à E17 (cercles pleins) et les contre-exemples CE1 à CE 4 (cercles vides). Sur ce graphique sont également représentés les seuils de sélectivité, s = 1,4 ; s = 1,5 et s = 1,6 comme guides pour les yeux.

La [Fig.11] montre que des valeurs élevées de sélectivité sont obtenues aussi bien avec les exemples E1 à E5, E7, E9 à E12, E15 et E16 ne comprenant qu'une couche 1002a d'oxyde de tungstène dopé dans le premier module diélectrique 1002, qu'avec les exemples E6, E8, E13 à E14 et E17 comprenant deux couches 1002a,1004a d'oxyde de tungstène dopé situé dans la premier 1002 et deuxième 1004 modules diélectriques.

Comme illustré sur la [Fig.11], les exemples E1 à E17 et les contre-exemples CE1 à CE7 peuvent être divisés en deux groupes. Le groupe des exemples E1 à E11 et des contre-exemples CE1 et CE2 pour lesquels la transmission lumineuse est d'environ 70% et le groupe des exemples E12 à E17 et des contre-exemples CE3 et CE4 pour lesquels la transmission lumineuse est supérieure à 78%.

Pour le premier groupe, c'est-à-dire les exemples et contre-exemples présentant une transmission lumineuse d'environ 70%, la [Fig.11] illustre clairement une réduction du facteur solaire pour les exemples selon l'invention en comparaison des contre-exemples CE1 et CE2. En particulier, la sélectivité des exemples est supérieure à 1,50 voire 1,55.

Le contre-exemple CE2 présente une sélectivité supérieure à 1,50 mais inférieure à 1,55. Ce contre-exemple CE2 comprend une couche d'oxyde de titane disposé au-dessus et en contact de la couche fonctionnelle métallique. Les exemples E9 à E11 correspondant présentent une plus faible valeur de facteur solaire et donc une sélectivité plus élevée.

Pour le deuxième groupe, c'est-à-dire les exemples et contre-exemples présentant une transmission lumineuse supérieure à 78%, la [Fig.11] illustre clairement une réduction du facteur solaire pour les exemples selon l'invention en comparaison des contre-exemples CE3 et CE4. En particulier, la sélectivité des exemples est supérieure à 1,40 voire 1,50.

Le contre-exemple CE4 présente une sélectivité supérieure à 1,40 mais inférieure à 1,50. Ce contre-exemple CE4 comprend une couche d'oxyde de titane disposé au-dessus et en contact de la couche fonctionnelle métallique. Les exemples E15 à E17 correspondant présentent une plus faible valeur de facteur solaire et donc une sélectivité plus élevée.

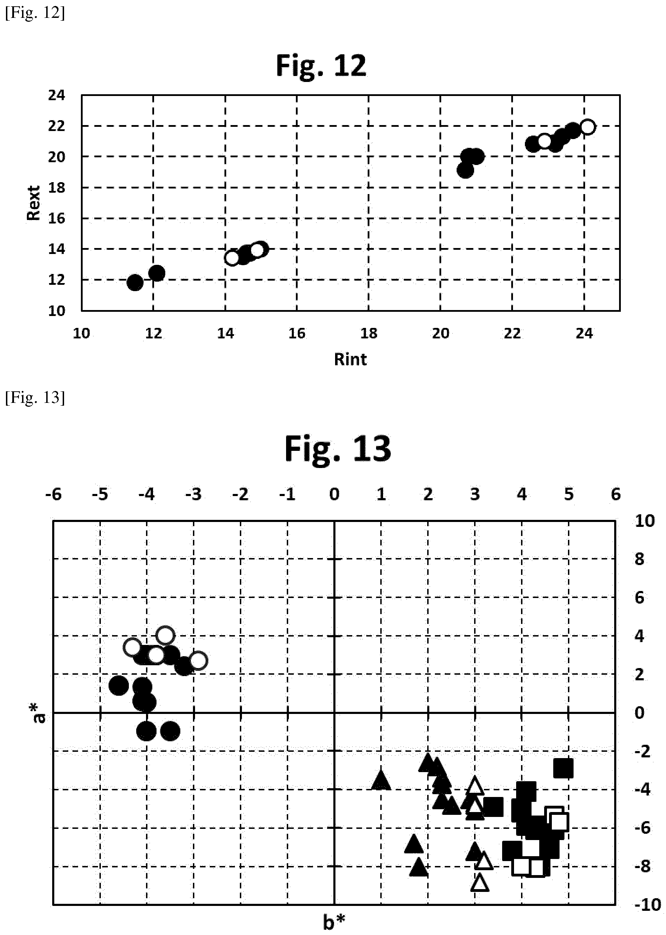

Les valeurs de réflexion lumineuse en face intérieur, Rint, et en face extérieur, Rext, sont représentées sur la [Fig.12] pour les exemples E1 à E17 (cercles pleins) et les contre-exemples CE1 à CE 4 (cercles vides).

La [Fig.12] montre que les exemples selon l'invention présentent des niveaux de réflexion en face interne et en face externe inférieures sinon équivalents à ceux des contre-exemple pour des valeurs de transmission lumineuse comparables. En d'autres termes, l'invention permet également de réduire la réflexion lumineuse tout en préservant en conservant le même niveau de transmission lumineuse.

Les valeurs des paramètres de couleur a*, b* sont représentées sur la [Fig.13] pour les exemples E1 à E17 (figurés pleins) et les contre-exemples CE1 à CE 4 (figurés vides). Les paramètres de couleur en transmission a*T, b*T sont représentés par des cercles, les paramètres en réflexion en face extérieur a*Rext, b*Rext sont représentés par des triangles, et les paramètres en réflexion en face intérieur a*Rint, b*Rint sont représentés par des carrés.

En transmission, les exemples selon l'invention, en particulier la plupart des exemples qui ne comprennent qu'une couche 1002 d'oxyde de tungstène dopé dans le premier module 1002 diélectrique, ont un paramètre de couleur b* plus faible. Les contre-exemples présentent une couleur décalée vers le jaune.

En réflexion face externe, les exemples selon l'invention ont un paramètre de couleur a*Rext plus faible. Les exemples qui ne comprennent qu'une couche 1002 d'oxyde de tungstène dopé dans le premier module 1002 diélectrique, ont également un paramètre de couleur b*Rext plus élevé, c'est-à-dire s'approchant de zéro. Les contre-exemples présentent une couleur décalée vers le rouge.

En réflexion face interne, les exemples selon l'invention ont un paramètre de couleur a*Rint plus faible et un paramètre de couleur b*Rext plus élevé. Les contre-exemples présentent une couleur décalée vers le violet.

Ces exemples illustrent très clairement les avantages des substrats de l'invention, à savoir qu'ils possèdent facteur solaire réduit, une sélectivité plus élevée, et présentent une couleur plus neutre.

## Revendications

1. Substrat transparent (1000) muni d'un empilement fonctionnel (1001) de couches minces sur au moins une de ses faces (1000a, 1000b), ledit empilement fonctionnel (1001) comprenant, en partant du substrat (1000) :
- au moins une couche fonctionnelle métallique (1003) placée entre deux modules diélectriques (1002,1004) de couches minces, et dans lequel au moins un des modules diélectriques (1002,1004) de couches minces comprend une couche (1002a,1004a) d'oxyde de tungstène, et l'oxyde de tungstène comprend au moins un élément dopant sélectionné parmi les éléments chimiques du groupe 1 selon la nomenclature de l'IUPAC.

2. Substrat (1000) selon la revendication 1, tel que l'indice de réfraction optique de la couche (1002a, 1003a) d'oxyde de tungstène est décroissant monotone avec la longueur d'onde à partir d'une valeur maximale supérieure à 2,4 à 350nm jusqu'à une valeur minimale entre 600nm et 900nm de sorte que la différence entre la valeur maximale et la valeur minimale est supérieure à 0,8, de préférence à 1,0, voire à 1,4.

3. Substrat (1000) selon l'une quelconque des revendications 1 à 2, tel que le coefficient d'extinction optique de la couche (1002a,1004a) d'oxyde de tungstène est inférieur à 0.2 à 500nm et inférieur à 2 à 1200nm.

4. Substrat (1000) selon l'une quelconque des revendications 1 à 3, tel la couche (1002a,1004a) d'oxyde de tungstène comprend l'élément dopant ou plusieurs éléments dopants dans des proportions telles que le rapport molaire dudit élément sur le tungstène ou la somme des rapports molaires de chaque élément sur le tungstène est compris entre 0,01 et 0,4, de préférence entre 0,01 et 0,2, voire entre 0,01 et 0,1.

5. Substrat (1000) selon l'une quelconque des revendications 1 à 4, tel que la couche (1002a,1004a) d'oxyde de tungstène comprend au moins un élément dopant sélectionné parmi l'hydrogène, le lithium, le sodium, le potassium et le césium.

6. Substrat selon la revendication 2, tel que la couche (1002a, 1004a) d'oxyde de tungstène comprend le césium comme élément dopant, et le rapport molaire du césium sur le tungstène est compris entre 0,01 et 0,2, de préférence entre 0,01 et 0,1.

7. Substrat (1000) selon l'une quelconque des revendications 1 à 3, tel que la couche (1002a) d'oxyde de tungstène est comprise dans le module diélectrique (1002) de couches situées sous la couche fonctionnelle métallique (1003), entre ledit substrat (1000) et ladite couche fonctionnelle métallique (1003).

8. Substrat (1000) selon l'une quelconque des revendications 1 à 3, tel que chaque module diélectrique (1002,1004) de couches comprend une couche (1002a,1004a) d'oxyde de tungstène.

9. Substrat (1000) selon l'une quelconque des revendications 1 à 5, tel que l'épaisseur physique de la ou des couches (1002a,1004a) d'oxyde de tungstène sont comprises entre 2nm et 50nm, en particulier entre 5nm et 30 nm, de préférence entre 5nm et 20 nm.

10. Substrat (1000) selon l'une quelconque des revendications 1 à 6, tel que l'empilement fonctionnel (1001) de couches comprend en outre une surcouche métallique (6001) de blocage, de préférence à base d'alliage nickel et chrome, située au-dessus et en contact de la couche fonctionnelle métallique (1003) et/ou une sous-couche métallique (6002) de blocage, de préférence à base d'alliage nickel et chrome, située en-dessous et en contact de la couche fonctionnelle métallique (1003).

11. Substrat (1000) selon l'une quelconque des revendications 1 à 7, tel que l'empilement fonctionnel de couches comprend en outre une surcouche (7001) d'oxyde de titane située au-dessus, de préférence en contact, de la couche fonctionnelle métallique (1003), ladite surcouche ayant, de préférence, une épaisseur physique d'au moins 5 nm.

12. Substrat (1000) selon l'une quelconque des revendications 1 à 8, tel que l'empilement fonctionnel (1001) de couches comprend une couche de d'indice de réfraction inférieur à 2,45 à 550nm, ladite couche étant comprise dans le module diélectrique (1004) de couches formant la partie supérieure de l'empilement fonctionnel (1001) en partant du substrat (1000).

13. Substrat (1000) selon l'une quelconque des revendications 1 à 12, tel que la couche fonctionnelle métallique (1003) est une couche à base d'argent.

14. Vitrage comprenant au moins deux substrats transparents, l'un des substrats étant un substrat selon l'une quelconque des revendications 1 à 13 disposé de sorte que l'empilement fonctionnel de couches est situé face deux et/ou en face trois dudit vitrage.

15. Procédé de fabrication d'un substrat transparent selon l'une quelconque de revendications 1 à 13, tel que la couche d'oxyde de tungstène est déposée par une méthode de pulvérisation cathodique magnétron à l'aide d'une cible en oxyde de tungstène dopé l'aide d'un élément chimique choisi parmi les éléments chimiques du groupe 1 selon la nomenclature de l'IUPAC.

## Patentansprüche

1. Transparentes Substrat (1000), das auf mindestens einer seiner Seiten (1000a, 1000b) mit einem Funktionsstapel (1001) aus dünnen Schichten versehen ist, wobei der Funktionsstapel (1001) ausgehend vom Substrat (1000) Folgendes umfasst:
- mindestens eine metallische Funktionsschicht (1003), die zwischen zwei dielektrischen Modulen (1002, 1004) aus dünnen Schichten angeordnet ist, und wobei mindestens eines der dielektrischen Module (1002, 1004) aus dünnen Schichten eine Schicht (1002a, 1004a) aus Wolframoxid umfasst und das Wolframoxid mindestens ein Dotierelement umfasst, das aus den chemischen Elementen der Gruppe 1 gemäß der IUPAC-Nomenklatur ausgewählt ist.

2. Substrat (1000) nach Anspruch 1, wobei der optische Brechungsindex der Wolframoxidschicht (1002a, 1003a) mit der Wellenlänge von einem Maximalwert größer als 2,4 bei 350 nm auf einen Minimalwert zwischen 600 nm und 900 nm monoton abnimmt, sodass die Differenz zwischen dem Maximalwert und dem Minimalwert größer als 0,8, vorzugsweise 1,0 oder sogar 1,4 ist.

3. Substrat (1000) nach einem der Ansprüche 1 bis 2, wobei der optische Extinktionskoeffizient der Wolframoxidschicht (1002a, 1004a) bei 500 nm kleiner als 0,2 und bei 1200 nm kleiner als 2 ist.

4. Substrat (1000) nach einem der Ansprüche 1 bis 3, wobei die Wolframoxidschicht (1002a, 1004a) das Dotierelement oder mehrere Dotierelemente in solchen Anteilen umfasst, dass das Molverhältnis des Elements zu Wolfram oder die Summe der Molverhältnisse jedes Elements zu Wolfram zwischen 0,01 und 0,4, vorzugsweise zwischen 0,01 und 0,2 oder sogar zwischen 0,01 und 0,1 liegt.

5. Substrat (1000) nach einem der Ansprüche 1 bis 4, wobei die Wolframoxidschicht (1002a, 1004a) mindestens ein Dotierelement ausgewählt aus Wasserstoff, Lithium, Natrium, Kalium und Cäsium umfasst.

6. Substrat nach Anspruch 2, wobei die Wolframoxidschicht (1002a, 1004a) Cäsium als Dotierelement umfasst und das Molverhältnis von Cäsium zu Wolfram zwischen 0,01 und 0,2, vorzugsweise zwischen 0,01 und 0,1 liegt.

7. Substrat (1000) nach einem der Ansprüche 1 bis 3, wobei die Wolframoxidschicht (1002a) in dem dielektrischen Modul (1002) aus Schichten enthalten ist, die sich unter der metallischen Funktionsschicht (1003) zwischen dem Substrat (1000) und der metallischen Funktionsschicht (1003) befinden.

8. Substrat (1000) nach einem der Ansprüche 1 bis 3, wobei jedes dielektrische Modul (1002, 1004) aus Schichten eine Wolframoxidschicht (1002a, 1004a) umfasst.

9. Substrat (1000) nach einem der Ansprüche 1 bis 5, wobei die physische Dicke der Wolframoxidschicht(en) (1002a, 1004a) zwischen 2 nm und 50 nm, insbesondere zwischen 5 nm und 30 nm, vorzugsweise zwischen 5 nm und 20 nm beträgt.

10. Substrat (1000) nach einem der Ansprüche 1 bis 6, wobei der Funktionsstapel (1001) aus Schichten ferner eine deckende Metallsperrschicht (6001), vorzugsweise auf Basis einer Nickel-Chrom-Legierung, die sich über der metallischen Funktionsschicht (1003) befindet und mit dieser in Kontakt steht, und/oder eine darunter liegende Metallsperrschicht (6002), vorzugsweise auf Basis einer Nickel-Chrom-Legierung, die sich unter der metallischen Funktionsschicht (1003) befindet und mit dieser in Kontakt steht, umfasst.

11. Substrat (1000) nach einem der Ansprüche 1 bis 7, wobei der Funktionsstapel aus Schichten ferner eine Deckschicht (7001) aus Titanoxid umfasst, die sich über der metallischen Funktionsschicht (1003) befindet und vorzugsweise mit dieser in Kontakt steht, wobei die Deckschicht vorzugsweise eine physische Dicke von mindestens 5 nm aufweist.

12. Substrat (1000) nach einem der Ansprüche 1 bis 8, wobei der Funktionsstapel (1001) aus Schichten eine Schicht mit einem Brechungsindex von weniger als 2,45 bei 550 nm umfasst, wobei die Schicht in dem dielektrischen Modul (1004) aus Schichten enthalten ist, die ausgehend vom Substrat (1000) den oberen Teil des Funktionsstapels (1001) bilden.

13. Substrat (1000) nach einem der Ansprüche 1 bis 12, wobei die metallische Funktionsschicht (1003) eine silberbasierte Schicht ist.

14. Verglasung, die mindestens zwei transparente Substrate umfasst, wobei eines der Substrate ein Substrat nach einem der Ansprüche 1 bis 13 ist, das so angeordnet ist, dass sich der Funktionsstapel aus Schichten auf Seite zwei und/oder Seite drei der Verglasung befindet.

15. Verfahren zur Herstellung eines transparenten Substrats nach einem der Ansprüche 1 bis 13, wobei die Wolframoxidschicht durch ein Magnetron-Kathodenzerstäubungsverfahren unter Verwendung eines Wolframoxid-Targets abgeschieden wird, das mit einem chemischen Element dotiert ist, das aus den chemischen Elementen der Gruppe 1 gemäß der IUPAC-Nomenklatur ausgewählt ist.

## Claims

1. A transparent substrate (1000) provided with a functional stack (1001) of thin layers on at least one of its faces (1000a, 1000b), said functional stack (1001) comprising, starting from the substrate (1000):
- at least one metallic functional layer (1003) placed between two dielectric modules (1002, 1004) of thin layers, and wherein at least one of the dielectric modules (1002, 1004) of thin layers comprises a layer (1002a, 1004a) of tungsten oxide, and
the tungsten oxide comprises at least one doping element selected from the chemical elements of group 1 according to the IUPAC nomenclature.

2. The substrate (1000) according to claim 1, wherein the optical refractive index of the tungsten oxide layer (1002a, 1003a) is decreasing monotonically with the wavelength from a maximum value greater than 2.4 at 350 nm up to a minimum value between 600 nm and 900 nm so that the difference between the maximum value and the minimum value is greater than 0.8, preferably than 1.0, or even than 1.4.

3. The substrate (1000) according to either one of claims 1 to 2, wherein the optical extinction coefficient of the tungsten oxide layer (1002a, 1004a) is less than 0.2 at 500 nm and less than 2 at 1200 nm.

4. The substrate (1000) according to any one of claims 1 to 3, wherein the tungsten oxide layer (1002a, 1004a) comprises the doping element or several doping elements in proportions such that the molar ratio of said element to tungsten or the sum of the molar ratios of each element to tungsten is between 0.01 and 0.4, preferably between 0.01 and 0.2, or even between 0.01 and 0.1.

5. The substrate (1000) according to any one of claims 1 to 4, wherein the tungsten oxide layer (1002a, 1004a) comprises at least one doping element selected from hydrogen, lithium, sodium, potassium and cesium.

6. The substrate according to claim 2, wherein the tungsten oxide layer (1002a, 1004a) comprises cesium as a doping element, and the molar ratio of cesium to tungsten is between 0.01 and 0.2, preferably between 0.01 and 0.1.

7. The substrate (1000) according to any one of claims 1 to 3, wherein the tungsten oxide layer (1002a) is comprised in the dielectric module (1002) of layers located under the metallic functional layer (1003), between said substrate (1000) and said metallic functional layer (1003).

8. The substrate (1000) according to any one of claims 1 to 3, wherein each dielectric module (1002, 1004) of layers comprises a layer (1002a, 1004a) of tungsten oxide.

9. The substrate (1000) according to any one of claims 1 to 5, wherein the physical thickness of the tungsten oxide layer(s) (1002a, 1004a) is between 2 nm and 50 nm, in particular between 5 nm and 30 nm, preferably between 5 nm and 20 nm.

10. The substrate (1000) according to any one of claims 1 to 6, wherein the functional stack (1001) of layers further comprises a blocking metal overlayer (6001), preferably based on nickel and chromium alloy, located above and in contact with the metallic functional layer (1003) and/or a metallic blocking underlayer (6002), preferably based on nickel and chromium alloy, located below and in contact with the metallic functional layer (1003).

11. The substrate (1000) according to any one of claims 1 to 7, wherein the functional stack of layers further comprises an overlayer (7001) of titanium oxide located above, preferably in contact with, the metallic functional layer (1003), said overlayer preferably having a physical thickness of at least 5 nm.

12. The substrate (1000) according to any one of claims 1 to 8, wherein the functional stack (1001) of layers comprises a layer with a refractive index less than 2.45 at 550 nm, said layer being comprised in the dielectric module (1004) of layers forming the upper part of the functional stack (1001) starting from the substrate (1000).

13. The substrate (1000) according to any one of claims 1 to 12, wherein the metallic functional layer (1003) is a silver-based layer.

14. A glazing comprising at least two transparent substrates, one of the substrates being a substrate according to any one of claims 1 to 13 arranged such that the functional stack of layers is located facing two and/or facing three of said glazing.

15. A method for manufacturing a transparent substrate according to any one of claims 1 to 13, such that the tungsten oxide layer is deposited by a magnetron sputtering method using a tungsten oxide target doped using a chemical element chosen from the chemical elements of group 1 according to the IUPAC nomenclature.
